# EUROPÄISCHE PATENTSCHRIFT

(11) **EP 4 127 656 B1**
(45) Veröffentlichungstag und Bekanntmachung des Hinweises auf die Patenterteilung: **12.02.2025**
(21) Anmeldenummer: 21717769.0
(22) Anmeldetag: 29.03.2021
(51) Int. Cl.: G01N 15/02, G01N 15/00, G01N 15/06

(54) **VERFAHREN UND AEROSOL-MESSGERÄT ZUM BESTIMMEN EINER QUELLENABHÄNGIGEN PARTIKELGRÖSSENVERTEILUNG EINES AEROSOLS**
METHOD AND AEROSOL-MEASURING DEVICE FOR DETERMINING A SOURCE-BASED PARTICLE SIZE DISTRIBUTION OF AN AEROSOL
PROCÉDÉ ET DISPOSITIF DE MESURE D'AÉROSOL POUR DÉTERMINER UNE DISTRIBUTION GRANULOMÉTRIQUE BASÉE SUR UNE SOURCE D'UN AÉROSOL

(30) Priorität: 02.04.2020 DE 102020109296
(43) Veröffentlichungstag der Anmeldung: 08.02.2023
(73) Patentinhaber: Palas GmbH Partikel-und Lasermesstechnik, 76229 Karlsruhe (DE)
(72) Erfinder: WEISS, Maximilian, 76356 Weingarten, Baden-Württemberg (DE); WEIS, Frederik, 76863 Herxheim, Rheinland-Pfalz (DE)
(74) Vertreter: Lichti - Patentanwälte Partnerschaft mbB
(86) Internationale Anmeldenummer: PCT/EP2021/058097
(87) Internationale Veröffentlichungsnummer: WO 2021/198147

(56) Entgegenhaltungen:
- CN-A- 108 680 473
- DE-A1- 102009 000 904
- RIVAS IOAR ET AL: "Source apportionment of particle number size distribution in urban background and traffic stations in four European cities", ENVIRONMENT INTERNATIONAL, PERGAMON PRESS, US, vol. 135, 4 December 2019 (2019-12-04), XP085976582, ISSN: 0160-4120, [retrieved on 20191204], DOI: 10.1016/J.ENVINT.2019.105345

## Beschreibung

Die Erfindung betrifft ein Verfahren und ein Aerosol-Messgerät zum Bestimmen einer quellenabhängigen Partikelgrößenverteilung eines Aerosols.

Im Sinne der Erfindung bezeichnet Aerosol ein Gemisch aus einem Gas mit festen und/oder flüssigen Schwebeteilchen (Aerosol-Partikel), wie beispielsweise Wassertröpfchen, Rußpartikel, Materialabrieb, Pollen, Bakterien, Viren und andere organische und chemische Stoffe. Die Partikelgrößenverteilung bezeichnet die Konzentration der Aerosol-Partikel in Abhängigkeit von deren Partikelgrößen und gibt Aufschluss darüber, wie häufig welche Partikelgrößen im Aerosol vorhanden sind.

Es sind Verfahren zum Bestimmen der Partikelgrößenverteilung eines Aerosols bekannt, die beispielsweise zur Ermittlung der Feinstaubbelastung eingesetzt werden. Dabei wird das Aerosol stets als Ganzes gemessen. Ändert sich die Zusammensetzung des Aerosols beispielsweise durch eine Aerosol-Quelle, ist mit den bekannten Verfahren eine quellenspezifische Analyse nicht möglich.

Es ist daher die Aufgabe der Erfindung, ein Verfahren und eine Vorrichtung zu entwickeln, um die Nachteile aus dem Stand der Technik zu beseitigen. Dabei soll insbesondere eine bessere Analyse des Aerosols ermöglicht werden.

Die Aufgabe wird gelöst durch ein Verfahren zum Bestimmen einer quellenabhängigen Partikelgrößenverteilung eines Aerosols mittels eines Aerosol-Messgeräts, wobei Aerosol-Partikel des durch eine Messzelle strömenden Aerosols in der Messzelle mit einem Lichtstrahl beleuchtet, Streulicht von einem Sensor aufgenommen und Streulichtsignale der Aerosol-Partikel intensitätsmäßig spektroskopisch erfasst werden, sowie eine für eine Partikelgrößenverteilung repräsentative Größenverteilung der Streulichtsignale erstellt wird, wobei ein Anteilparameter bestimmt wird, der einem Anteil eines quellenabhängigen Aerosolteils am Aerosol entspricht, wobei eine Partikelgrößenverteilung der Aerosol-Partikel bestimmt wird und wobei aus dem Anteilparameter und der Partikelgrößenverteilung die quellenabhängige Partikelgrößenverteilung des Aerosols bestimmt wird.

Vorrichtungsmäßig wird die Aufgabe gelöst durch ein Aerosol-Messgerät zum Bestimmen einer quellenabhängigen Partikelgrößenverteilung eines Aerosols, wobei Aerosol-Partikel des Aerosols in einer Messzelle derart angeordnet sind, dass die Aerosol-Partikel von einem Lichtstrahl beleuchtbar sind, wobei Streulicht der Aerosol-Partikel von einem Sensor aufnehmbar und Streulichtsignale der Aerosol-Partikel intensitätsmäßig spektroskopisch erfassbar sind, so dass eine für eine Partikelgrößenverteilung repräsentative Grö-βenverteilung der Streulichtsignale erstellbar ist, wobei ein Anteilparameter bestimmbar ist, der einem Anteil eines quellenabhängigen Aerosolteils am Aerosol entspricht, wobei eine Partikelgrößenverteilung der Aerosol-Partikel bestimmbar ist und wobei aus dem Anteilparameter und der Partikelgrößenverteilung die quellenabhängige Partikelgrößenverteilung des Aerosols bestimmbar ist.

Daneben wird die Aufgabe gelöst durch ein Computerprogramm mit Programmcodemitteln, das dazu ausgestaltet ist, die Schritte eines erfindungsgemäßen Verfahrens durchzuführen, wenn das Computerprogramm auf einem Computer oder einer entsprechenden Recheneinheit ausgeführt wird.

Die Erfindung basiert auf der Grundüberlegung, dass sich durch eine Aerosol-Quelle (Im Folgenden "Quelle") die Zusammensetzung des Aerosols ändert, so dass das Aerosol einen quellenabhängigen und einen quellenunabhängigen Anteil aufweist. Ein Beispiel für eine Quelle im Sinne der Erfindung ist eine Person, die sich im Bereich des Aerosols befindet, wobei die ausgeatmete Luft der Person als Beispiel eines quellenabhängigen Aerosols im Sinne der Erfindung die Zusammensetzung des Aerosols ändert und insbesondere eine mikrobielle Belastung des Aerosols bewirken kann. Insofern ist beispielsweise die von einer Person ausgeatmete Luft im Sinne der Erfindung als quellenabhängiger Aerosolteil zu verstehen, wobei in diesem Fall die Partikelgrößenverteilung der ausgeatmeten Luft die entsprechende quellenabhängige Partikelgrößenverteilung darstellt. Der Anteilparameter entspricht im Sinne der Erfindung dem Anteil des quellenabhängigen Aerosols oder Aerosolteils am gesamten Aerosol und erlaubt die Bestimmung der quellenabhängigen Partikelgrößenverteilung, die sich auf das Aerosol der Quelle, beispielsweise die ausgeatmete Luft der Person, bezieht. Durch die Erfindung ist die quellenabhängige Partikelgrö-βenverteilung, die dem quellenabhängigen Teil des (gesamten) Aerosols entspricht, charakterisierbar, was eine verbesserte Analyse des Aerosols erlaubt. Das Entsprechende gilt vorrichtungsmäßig für das erfindungsgemäße Aerosol-Messgerät.

Der Anteilparameter kann aus einem Vergleich zweier Partikelgrößenverteilungen des Aerosols bestimmt werden, wobei der Vergleich insbesondere die Bildung einer Differenz und/oder eines Quotienten umfassen kann, um den Anteilparameter einfach zu bestimmen. Mindestens eine der Partikelgrößenverteilungen kann eine theoretische Partikelgrößenverteilung und/oder eine durch Messwerte bestimmte Partikelgrößenverteilung sein. Vorzugsweise ist eine der Partikelgrößenverteilungen eine quellenabhängige Partikelgrößenverteilung.

Vorzugsweise wird der Anteilparameter aus einem Vergleich von einem Parameter mindestens einer Gaskomponente des Aerosols mit einem quellenabhängigen Referenzwert bestimmt, was ein schnelles Verfahren zum Bestimmen des Anteilparameters darstellt. Der Referenzwert kann beispielsweise benutzerdefiniert und/oder aus einer vorherigen Messung bestimmt werden. In letzterem Fall wird der Referenzwert beispielsweise aus einer Serie von Messungen bestimmt, die über einen Zeitraum von 24 Stunden durchgeführt wird. Gaskomponenten im Sinne der Erfindung kann insbesondere mindestens ein Stoff der folgenden Gruppe sein: Kohlenstoffoxide, Stickstoffoxide, Schwefeloxide, Ozon, flüchtige organische Verbindungen (engl. volatile organic compounds, VOC).

Vorzugsweise ist der Parameter der mindestens einen Gaskomponente deren Konzentration in dem Aerosol und/oder der quellenabhängige Referenzwert entspricht vorzugsweise einer quellenabhängigen Konzentration der Gaskomponente. Besonders vorzugsweise wird zur Bestimmung des Anteilparameters die Konzentration von Kohlenstoffdioxid in dem Aerosol mit einem Referenzwert zwischen 1% und 10%, insbesondere zwischen 3% und 5%, insbesondere mit einem Referenzwert von 4% verglichen, wobei ein Referenzwert von 4% (40.000 ppm) der Konzentration von Kohlenstoffdioxid in dem menschlichen Atem entspricht. Durch die Verwendung der Konzentration von Kohlenstoffdioxid zur Bestimmung des Anteilparameters ergibt sich ein besonders zuverlässiges Verfahren.

Um insbesondere den Anteil von ausgeatmeter Luft an dem Aerosol als Anteilparameter zu bestimmen, wird beispielsweise die Konzentration von Kohlenstoffdioxid in dem Aerosol durch die Konzentration von Kohlenstoffdioxid in ausgeatmeter Luft (4%) geteilt.

Um die Genauigkeit des Verfahrens zu verbessern, kann der Parameter der mindestens einen Gaskomponente und/oder der Referenzwert korrigiert werden. Die Korrektur kann beispielsweise die Kompensation der Einflüsse von atmosphärischer Luft umfassen, wobei diese Einflüsse modellhaft angenommen werden und/oder durch eine über einen Zeitraum erfolgte Messserie bestimmt werden. In einer vorteilhaften Ausgestaltung der Erfindung wird der Korrekturwert durch eine Serie von Messungen über ein benutzerdefiniertes Zeitintervall, beispielsweise 24 Stunden, bestimmt, wobei insbesondere der Korrekturwert dem Minimum der Messungen entspricht. Beispielsweise können die Einflüsse von atmosphärischer Luft auf den Parameter und/oder auf den Referenzwert korrigiert werden, indem entsprechende Werte subtrahiert werden, um eine einfache Korrektur durchzuführen. Insbesondere kann ein Wert von etwa 0,05% von der bestimmten Konzentration von Kohlenstoffdioxid im Aerosol und von der Konzentration von Kohlenstoffdioxid in ausgeatmeter Luft abgezogen werden. Die Korrektur kann auch Einflüsse von Feuchtigkeit, insbesondere der relativen Luftfeuchtigkeit umfassen. Alternativ oder zusätzlich dazu kann die Korrektur eine Normierung umfassen.

Vorzugsweise wird das Verfahren abgebrochen, wenn der Anteilparameter einen ersten benutzerdefinierten Wert unterschreitet und/oder wenn der Anteilparameter einen zweiten benutzerdefinierten Wert überschreitet. Beispielsweise wird das Verfahren abgebrochen, wenn der Wert des Anteilparameters ergibt, dass kein quellenabhängiger Teil des Aerosols vorliegt und/oder sich die Zusammensetzung des Aerosols nicht geändert hat.

Die bestimmte Partikelgrößenverteilung des Aerosols kann korrigiert werden, um störende Hintergrundeinflüsse zu beseitigen. Insbesondere kann zur Korrektur eine Normierung erfolgen. Vorzugsweise werden bei der Korrektur Feuchtigkeitseinflüsse auf die Partikelgrößenverteilung kompensiert. Außerdem kann die Korrektur anhand einer Partikelgrößenverteilung durchgeführt werden, die vorzugsweise theoretisch bestimmt wird und/oder anhand von vorheriger Messungen bestimmt wird. Insbesondere kann die Korrektur anhand einer bestimmten Partikelgrößenverteilung erfolgen, die bei einer benutzerdefinierten Konzentration von Kohlenstoffdioxid, beispielsweise bei einer Konzentration von Kohlenstoffdioxid von 400 ppm, bestimmt wurde.

Zur Beschleunigung des Verfahrens können ein Downsampling und/oder eine Kompression der bestimmten Partikelgrößenverteilung und/oder der quellenabhängigen Partikelgrößenverteilung erfolgen.

Die quellenabhängige Partikelgrößenverteilung kann durch eine Multiplikation der Partikelgrößenverteilung des Aerosols mit dem Anteilparameter bestimmt werden, was vorzugsweise für jeden Wert der Partikelgrößenverteilung erfolgt.

Vorzugsweise wird aus mindestens einem Teil der quellenabhängigen Partikelgrößenverteilung ein Güteparameter des Aerosols bestimmt, der dessen Qualität entspricht, um die Qualität des Aerosols einfach zu charakterisieren. Vorzugsweise entspricht der Güteparameter der Luftqualität. Die Bestimmung des Güteparameters umfasst weiter vorzugsweise eine Summierung von mindestens einem Teil der quellenabhängigen Partikelgrößenverteilung. Insbesondere ist der PM_{2,5}-Wert der quellenabhängigen Partikelgrößenverteilung ein Güteparameter im Sinne der Erfindung und entspricht dem Anteil von Aerosol-Partikeln mit Partikeldurchmessern von kleiner als 2,5 µm am quellenabhängigen Aerosol, beispielsweise an der ausgeatmeten Luft. Zur Ermittlung des Güteparameters kann die quellenabhängige Partikelgrößenverteilung mindestens teilweise interpoliert und/oder integriert werden.

In besonders vorzugsweiser Ausgestaltung umfasst die Bestimmung des Güteparameters eine Gewichtung, die beispielsweise von der Partikelgröße der Aerosol-Partikel und/oder von einem Parameter mindestens einer Gaskomponente und/oder von der relativen Feuchtigkeit des Aerosols abhängig ist.

Vorzugsweise umfasst die Bestimmung des Anteilparameters und/oder der Partikelgrößenverteilung und/oder der quellenabhängigen Partikelgrößenverteilung und/oder des Güteparameters jeweils die Bestimmung von Einzelwerten und eine statistische Auswertung der Einzelwerte, um die Genauigkeit der bestimmten Parameter zu verbessern. Insbesondere kann hierzu eine benutzerdefinierte Anzahl der Bestimmungen über einen benutzerdefinierten Zeitraum erfolgen, wobei die Einzelwerte durch eine Mittelwertbildung, insbesondere durch eine gleitende Mittelwertbildung, ausgewertet werden.

Vorrichtungsmäßig kann das Aerosol-Messgerät eine elektronische Verarbeitungseinrichtung aufweisen, die dazu ausgebildet ist, die Schritte eines erfindungsgemäßen Verfahrens durchzuführen. Vorzugsweise weist das Aerosol-Messgerät eine Gasmesseinheit auf, die dazu ausgebildet ist, die Konzentration mindestens einer Gaskomponente des Aerosols zu bestimmen. Hierzu weist die Gasmesseinheit insbesondere mindestens einen Gassensor auf. Die Gasmesseinheit kann zur Detektion von mindestens einem der folgenden Stoffe und/oder Parameter ausgebildet sein, insbesondere eines Mitglieds der Gruppe: Kohlenstoffoxide, Stickstoffoxide, Schwefeloxide, Ozon, flüchtige organische Verbindungen, relative Luftfeuchtigkeit.

Der Lichtstrahl des Aerosol-Messgeräts weist insbesondere polychromatisches und/oder Laserlicht auf. Die Bewegungsrichtung der Aerosol-Partikel in der Messzelle, die Richtung des Lichtstrahles in der Messzelle und die Richtung des Streulichtes können jeweils paarweise senkrecht zueinander angeordnet sein. Das Aerosol-Messgerät weist vorzugsweise eine Ausgabeeinrichtung auf, die zur Ausgabe einer Information ausgestaltet ist, wobei die Information der quellenabhängigen Partikelgrößenverteilung, insbesondere dem Güteparameter, zugeordnet sein kann. Die Ausgabeeinrichtung kann insbesondere eine Anzeige aufweisen.

In einer weiteren vorteilhaften Ausgestaltung der Erfindung weist das Aerosol-Messgerät eine Fördereinrichtung auf, um die Aerosol-Partikel zur Messzelle zu befördern, wobei die Fördereinrichtung beispielsweise eine Pumpe und/oder einen Ventilator aufweist.

Weitere Vorteile und Merkmale ergeben sich aus den Ansprüchen und der folgenden Beschreibung, in der ein Ausführungsbeispiel der Erfindung unter Bezugnahme auf die Zeichnung im Einzelnen beschrieben ist. Dabei zeigen:
- Fig. 1: eine schematische Darstellung eines Aerosol-Messgerätes in einem zu messenden Aerosol;
- Fig. 2: ein schematischer Aufbau des Aerosol-Messgeräts der Fig. 1;

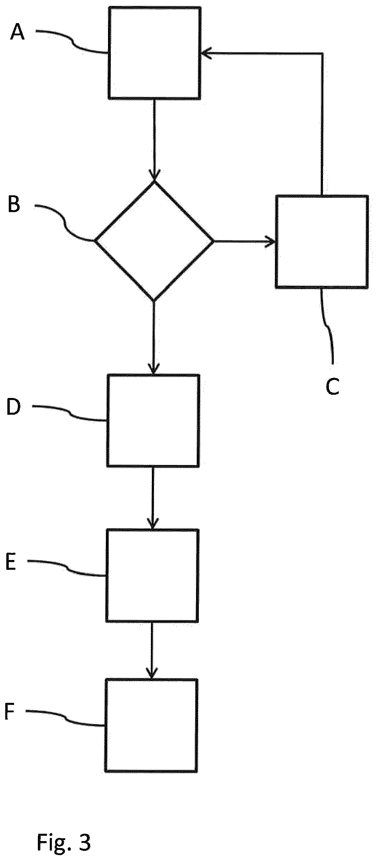

- Fig. 3: ein Ablaufdiagramm eines erfindungsgemäßen Verfahrens;
- Fig. 4: eine erste Partikelgrößenverteilung mit einer ersten quellenabhängigen Partikelgrößenverteilung;
- Fig. 5: eine zweite Partikelgrößenverteilung mit einer zweiten quellenabhängigen Partikelgrößenverteilung und
- Fig. 6: eine dritte Partikelgrößenverteilung mit einer dritten quellenabhängigen Partikelgrößenverteilung.

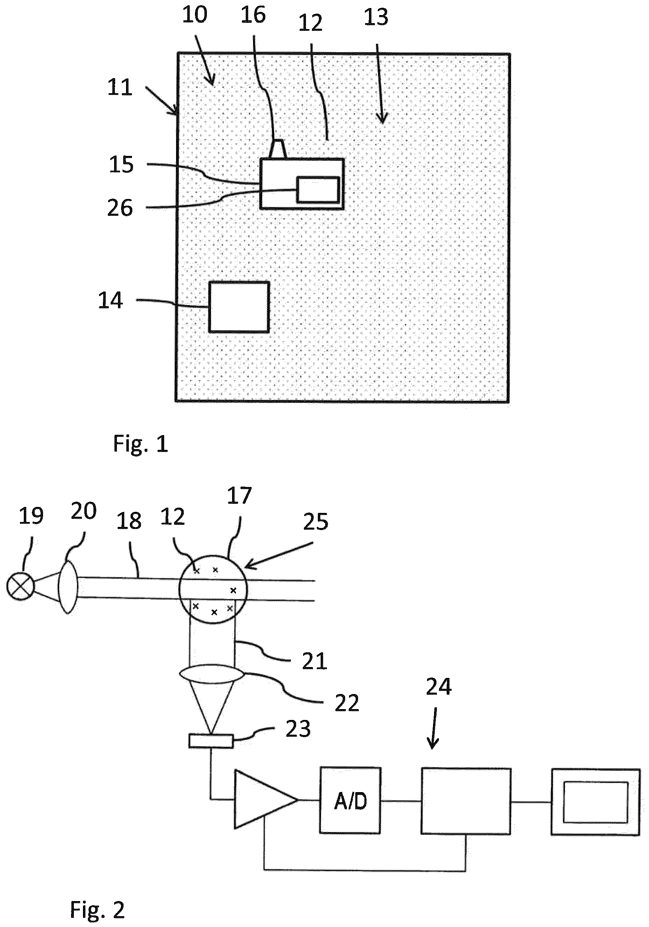

Fig. 1 zeigt in schematischer Darstellung ein Aerosol 10 in einem abgeschlossenen Bereich 11, wobei das Aerosol 10 feste und flüssige Aerosol-Partikel 12 in einem Gas 13, beispielsweise Luft, enthält. Aerosol-Partikel 11 sind beispielsweise Wassertröpfchen, Rußpartikel, Materialabrieb, Pollen und/oder andere organische und chemische Stoffe. Als Aerosol-Quelle 14 befindet sich eine Person im Bereich 11. Im Folgenden wird angenommen, dass sich das Aerosol 10 innerhalb des Bereiches 11 im Wesentlichen durch die ausgeatmete Luft der Person 14 ändert. Das Aerosol 10 des Bereiches 11 weist daher einen quellenabhängigen Aerosolteil 10a, hier die ausgeatmete Luft, und einen quellenunabhängigen Aerosolteil 10b auf.

Im Bereich 11 des Aerosols 10 ist ein Aerosol-Messgerät 15 in Form eines Aerosol-Spektrometers angeordnet, das eine Partikelgrößenverteilung cₙ der Aerosol-Partikel 12 des Aerosols 10 in Abhängigkeit von deren Partikeldurchmessern dₚ misst. Die Aerosol-Partikel 12 werden hierzu über eine Zugangsöffnung 16 des Aerosol-Messgeräts 15 und über ein Durchflussrohr 17 mittels einer stromab angeordneten Fördereinrichtung (nicht dargestellt) hindurchgesaugt, wobei die Fördereinrichtung als Pumpe ausgestaltet ist. Das Durchflussrohr 17 ist im skizzierten Aufbau des Aerosol-Messgeräts 15 gemäß Fig. 2 senkrecht zur Zeichenebene angeordnet.

Die Aerosol-Partikel 12 werden im Durchflussrohr 17 senkrecht zu ihrer Flugrichtung mit einem kollimierten Lichtstrahl 18 aus polychromatischen Licht einer Lichtquelle 19 und einer Linse 20 bestrahlt. Aufgrund der dadurch stattfindenden Streuprozesse senden die Aerosol-Partikel 12 Streulicht 21 ab, das senkrecht zur Flugrichtung der Aerosol-Partikel 12 und senkrecht zur Bestrahlungsrichtung des Lichts aus der Lichtquelle 19 auf eine Sammellinse 22 trifft. Die Sammellinse 22 fokussiert das Streulicht 21 auf einen optoelektrischen Sensor 23, der das Streulicht 21 in elektrische Signale umwandelt. Eine elektronische Verarbeitungseinrichtung 24 bestimmt aus den elektrischen Signalen die Partikelgrößenverteilung cₙ in Abhängigkeit von den Partikeldurchmessern dₚ der Aerosol-Partikel 12. Die räumliche Überlappung des Lichtstrahls 18, des gemessenen Streulichts 21 und des erfassten Teils der Aerosol-Partikel 12 im Durchflussrohr 17 definiert eine virtuelle räumliche Messzelle 25, in der die Partikelgrößenverteilung cₙ bestimmt wird.

Bei der Messung ist die Lichtintensität des Streulichts 21 und damit auch die hierdurch bedingte elektrische Signalstärke ein Maß für die Partikelgröße der Aerosol-Partikel 12, der dementsprechend ein Partikeldurchmesser dₚ zugeordnet wird. Die gemessene Partikelgrößenverteilung cₙ ist abhängig vom Partikeldurchmesser dₚ, so dass gilt: cₙ = f(dₚ).

Die bestimmte Partikelgrößenverteilung cₙ wird für diskrete Partikeldurchmesser dₚ als Messpunkte bestimmt, wobei in der Regel bis zu 256 Kanäle verwendet werden. Zur Verbesserung der Genauigkeit wird der Verlauf der Partikelgrößenverteilung cₙ zwischen den Messpunkten bei der Auswertung in der elektronischen Verarbeitungseinrichtung 24 lokal mittels kubischer Splines interpoliert, so dass sich ein kontinuierlicher Verlauf ergibt. Zur Beschleunigung des nachfolgend beschriebenen erfindungsgemäßen Verfahrens wird die Partikelgrößenverteilung cₙ mittels Downsampling für 32 Kanäle bestimmt.

Von der bestimmten Partikelgrößenverteilung cₙ wird eine Referenz-Partikelgrößenverteilung cᵣ subtrahiert, wobei die Referenz-Partikelgrößenverteilung cᵣ eine modellhafte Verteilung ist, die üblicher Raumluft entspricht und eine Kohlenstoffdioxid-Konzentration von etwa 400 ppm aufweist.

Das Aerosol-Messgerät 15 weist eine Gasmesseinheit 26 auf, die als Gassensor ausgebildet ist und die Konzentration k_{CO2} von Kohlenstoffdioxid (CO₂) im Aerosol bestimmt, was im Sinne der Erfindung dem Volumenanteil von CO₂ an dem Aerosol 10 entspricht. Dieser Wert wird an die elektronische Verarbeitungseinrichtung 24 übermittelt.

Im Folgenden wird eine Ausgestaltung des erfindungsgemäßen Verfahrens gemäß Fig. 2 beschrieben, bei dem die quellenabhängige Partikelgrößenverteilung cₙ' bestimmt wird, die dem quellenabhängigen Aerosolteil 10a entspricht und der von der Person 14 ausgeatmeten Luft zugeordnet ist. Im Sinne der Erfindung wird diese Partikelgrößenverteilung cₙ' als quellenabhängige Partikelgrößenverteilung bezeichnet. Durch das Verfahren wird insbesondere das Infektionsrisiko innerhalb des Bereiches 11 infolge der mikrobiellen Belastung des Aerosols 10 bestimmt.

In einem ersten Schritt A des Verfahrens wird der Anteilparameter f bestimmt. Hierzu wird durch den Gassensor 26 die CO₂-Konzentration k_{CO2} in dem Aerosol 10 bestimmt und an die elektrische Verarbeitungseinrichtung 24 übermittelt. Von der CO₂-Konzentration k_{CO2} wird eine Referenz-Konzentration k_{ref} subtrahiert, die der üblichen CO₂-Konzentration von Raumluft entspricht und im vorliegenden Beispiel etwa 0,05 % beträgt. Die Referenz-Konzentration k_{ref} wird bestimmt, indem über einen Zeitraum von 24 Stunden in einem Intervall von einer Messung pro Stunde die CO₂-Konzentration des Aerosols 10 gemessen und das Minimum dieser Messwerte gebildet wurde. Da die im vorliegenden Beispiel zu bestimmende quellenabhängige Partikelgrößenverteilung cₙ' Atemluft entspricht, wird von der CO₂-Konzentration von ausgeatmeter Luft - hier ca. 4% - ebenfalls die Referenz-Konzentration k_{ref} subtrahiert. Im Ergebnis erhält man eine korrigierte CO₂-Konzentration k_{CO2}' des Aerosols 10 und eine korrigierte Referenz-Konzentration k_{ref}'. Der Quotient dieser beiden Größen ergibt einen Einzelwert fᵢ für den Anteilparameter f der Atemluft 10a an dem Aerosol 10. Die Einzelwerte fᵢ des Anteilparameters f werden fortwährend über eine zeitliche Dauer von 30 min bestimmt, wobei der Anteilparameter f als gleitender Mittelwert aus den Einzelwerten gebildet wird.

In einem nächsten Schritt B erfolgt eine Abfrage des Anteilfaktors f: Falls sich innerhalb des Bereiches 11 keine Person 14 aufhält, ergibt sich für den Anteilparameter f ein Wert von 0, woraufhin das Verfahren abbricht C und nach einem benutzerdefinierten Zeitintervall das Verfahren neu startet.

Ergibt die Abfrage B einen Wert für den Anteilparameter von größer 0, wird das Verfahren fortgesetzt und die Partikelgrößenverteilung cₙ des Aerosols 11 in vorstehend beschriebener Weise bestimmt D. Das Aerosol-Messgerät 15 bestimmt kontinuierlich die Partikelgrößenverteilung cₙ des Aerosols 10 in einer Messfrequenz von einer Messung pro Minute und bildet die im Folgenden verwendete Partikelgrößenverteilung cₙ als gleitenden Mittelwert.

Die quellenabhängige Partikelgrößenverteilung cₙ' wird anschließend bestimmt E, indem die Partikelgrößenverteilung cₙ des Aerosols 10 mit dem Anteilparameter f multipliziert wird, was im vorliegenden Beispiel für jeden Messkanal erfolgt.

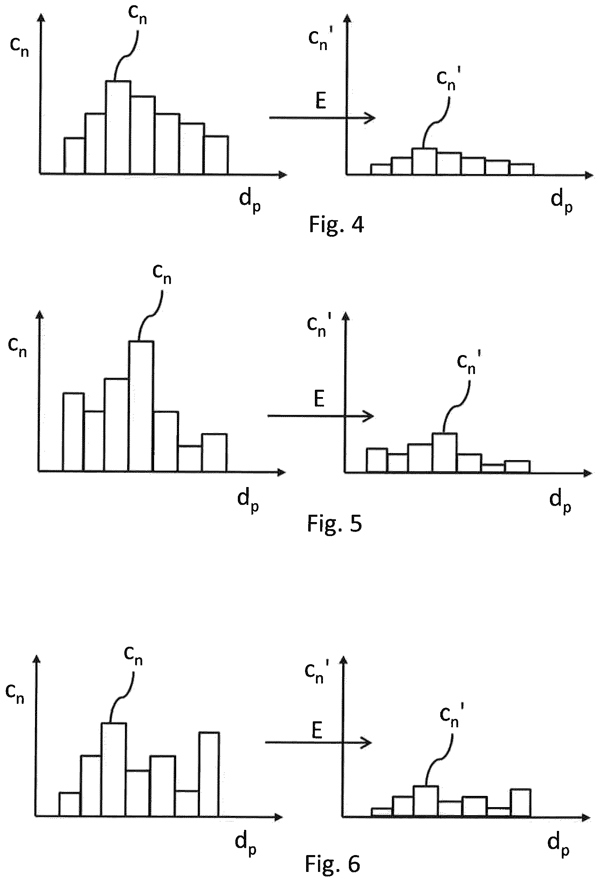

Die Bestimmung E der quellenabhängigen Partikelgrößenverteilungen cₙ' ist in den Fig. 4 bis 6 dargestellt, die jeweils auf der linken Seite eine beispielshafte Partikelgrö-βenverteilung cₙ des Aerosols 10 und jeweils auf der rechten Seite eine quellenabhängige Partikelgrößenverteilung cₙ' zeigen. Die Partikelgrößenverteilungen cₙ, cₙ' sind dort jeweils in Abhängigkeit des Partikeldurchmessers dₚ als Balkendiagramme veranschaulicht. Aus Gründen der Übersicht weisen die Partikelgrößenverteilungen cₙ, cₙ' jeweils 7 Messwerte auf. In Fig. 4 beträgt der Anteilfaktor ca. 0,28, in Fig. 5 ca. 0,3 und in Fig. 6 ca. 0,32. Hieraus ist ersichtlich, dass der Anteilfaktor f im Übergang der Partikelgrößenverteilung cₙ der Fig. 4 zur Partikelgrößenverteilung cₙ der Fig. 6 zugenommen hat. Dies deutet darauf hin, dass sich die Person 14 möglicherweise längere Zeit im Bereich 11 aufgehalten hat und ein kontinuierlich steigender Anteil der Atemluft 10a am Aerosol 10 vorliegt.

Nach der Bestimmung E der quellenabhängigen Partikelgrößenverteilung cₙ' erfolgt eine Bestimmung F von Güteparametern g, die der quellenabhängigen Partikelgrößenverteilung cₙ' zugeordnet sind und im Folgenden beschrieben werden:
Die Gesamtanzahl g₁ der Aerosol-Partikel 12 in der quellenabhängigen Partikelgrößenverteilung cₙ' wird bestimmt durch eine Aufsummierung der quellenabhängigen Partikelgrößenverteilung cₙ' über sämtliche Kanäle. Da die quellenabhängige Partikelgrößenverteilung cₙ' insbesondere auch mikrobielle Verunreinigungen des Aerosols 10, beispielsweise durch Bakterien oder Viren, beinhaltet, dient die Gesamtanzahl g₁ als Indikator für eine Infektionsgefahr und wird daher auch als "Germ Indicator" bezeichnet.

Aus der quellenabhängigen Partikelgrößenverteilung cₙ' wird daneben der PM_{2,5}-Parameter g₂ bestimmt, der die Massefraktion aller Aerosol-Partikel 12 mit Partikeldurchmessern dₚ von kleiner als 2,5 µm am quellenabhängigen Aerosolteil 10a, also der ausgeatmeten Luft, wiedergibt und ein weiterer Güteparameter g für insbesondere die Feinstaubbelastung des quellenabhängigen Aerosols 10a darstellt. Der PM_{2,5}-Wert beinhaltet ebenfalls mikrobielle Verunreinigungen der Luft und gibt somit auch Aufschluss über die mikrobielle Belastung des quellenabhängigen Aerosolteils 10a. Außerdem wird ein modifizierter PM_{2,5}-Parameter g₃ bestimmt, bei dem die Berechnung anhand einer Gewichtung in Abhängigkeit von der relativen Luftfeuchtigkeit des Aerosols 10 erfolgt.

Zu einer umfassenden Bewertung der Aerosol-Qualität weist die Gasmesseinheit 26 weitere, in Fig. 1 nicht gezeigte Komponenten auf, wie beispielsweise ein Hygrometer zur Bestimmung der relativen Luftfeuchtigkeit, Sensoren zur Bestimmung flüchtiger organischer Verbindungen, Ozon, Stickoxiden, Schwefeloxiden und/oder Kohlenmonoxid. Ferner können Parameter bestimmt werden, die sich aus mehreren dieser Kenngrößen zusammensetzen. Beispielsweise ist die Bestimmung eines Indikators für die Infektionsgefahr vorgesehen, der von der korrigierten PGV, den Konzentrationen flüchtiger organischer Verbindungen und von CO2 sowie von der relativen Feuchtigkeit abhängig ist.

Aus der quellenabhängigen Partikelgrößenverteilung cₙ' wird auch die Anzahlkonzentration kolonie-bildender Partikel (kbP pro m³) bestimmt, die ein Maß für die mikrobielle Verunreinigung der Luft darstellt.

Die Schritte des vorstehend beschriebenen Verfahrens werden kontinuierlich durchgeführt, wenn ein erfindungsgemäßes Computerprogramm auf der Verarbeitungseinrichtung 24 ausgeführt wird.

## Patentansprüche

1. Verfahren zum Bestimmen einer quellenabhängigen Partikelgrößenverteilung (cₙ') eines Aerosols (10) mittels eines Aerosol-Messgeräts (15), wobei Aerosol-Partikel (12) des durch eine Messzelle (25) strömenden Aerosols (10) in der Messzelle (25) mit einem Lichtstrahl (18) beleuchtet, Streulicht (21) von einem Sensor (23) aufgenommen und Streulichtsignale (21) der Aerosol-Partikel (12) intensitätsmäßig spektroskopisch erfasst werden, sowie eine für eine Partikelgrößenverteilung (cₙ) repräsentative Größenverteilung der Streulichtsignale (21) erstellt wird, wobei ein Anteilparameter (f) bestimmt wird (A), der einem Anteil eines quellenabhängigen Aerosolteils (10a) am Aerosol (10) entspricht, wobei eine Partikelgrößenverteilung (cₙ) der Aerosol-Partikel (12) bestimmt wird (D) und wobei aus dem Anteilparameter (f) und der Partikelgrößenverteilung (cₙ) die quellenabhängige Partikelgrößenverteilung (cₙ') des Aerosols (10) bestimmt wird (E).

2. Verfahren nach Anspruch 1, **dadurch gekennzeichnet, dass** der Anteilparameter (f) aus einem Vergleich zweier Partikelgrößenverteilungen (cₙ) des Aerosols (10) bestimmt wird.

3. Verfahren nach einem der Ansprüche 1 oder 2, **dadurch gekennzeichnet, dass** der Anteilparameter (f) aus einem Vergleich von einem Parameter (k) mindestens einer Gaskomponente (13) des Aerosols (10) mit einem quellenabhängigen Referenzwert (k_{ref}) bestimmt wird.

4. Verfahren nach Anspruch 3, **dadurch gekennzeichnet, dass** der Parameter (k) der mindestens einen Gaskomponente (13) der Konzentration der Gaskomponente (13) in dem Aerosol (10) entspricht und/oder dass der quellenabhängige Referenzwert (k_{ref}) einer quellenabhängigen Konzentration der Gaskomponente (13) entspricht.

5. Verfahren nach Anspruch 4, **dadurch gekennzeichnet, dass** zur Bestimmung (A) des Anteilparameters (f) die Konzentration (k_{CO2}) von Kohlenstoffdioxid in dem Aerosol (10) mit einem Referenzwert k_{ref} zwischen 1% bis 10%, insbesondere zwischen 3% und 5%, insbesondere mit einem Referenzwert k_{ref} von 4% verglichen wird.

6. Verfahren nach einem der Ansprüche 3 bis 5, **dadurch gekennzeichnet, dass** der Parameter (k) der mindestens einen Gaskomponente (13) und/oder der Referenzwert (k_{ref}) korrigiert werden.

7. Verfahren nach einem der Ansprüche 1 bis 6, **dadurch gekennzeichnet, dass** das Verfahren abgebrochen wird (C), wenn der Anteilparameter (f) einen ersten benutzerdefinierten Wert unterschreitet u/o wenn der Anteilparameter (f) einen zweiten benutzerdefinierten Wert überschreitet.

8. Verfahren nach einem der Ansprüche 1 bis 7, **dadurch gekennzeichnet, dass** die bestimmte Partikelgrößenverteilung (cₙ) des Aerosols (10) korrigiert wird.

9. Verfahren nach einem der Ansprüche 1 bis 8, **dadurch gekennzeichnet, dass** die quellenabhängige Partikelgrö-βenverteilung (cₙ') bestimmt wird (E) durch eine Multiplikation der Partikelgrößenverteilung (cₙ) des Aerosols (10) mit dem Anteilparameter (f).

10. Verfahren nach einem der Ansprüche 1 bis 9, **dadurch gekennzeichnet, dass** aus mindestens einem Teil der quellenabhängigen Partikelgrößenverteilung (cₙ') ein Güteparameter (g) des Aerosols (10) bestimmt wird (F).

11. Verfahren nach Anspruch 10, **dadurch gekennzeichnet, dass** die Bestimmung (F) des Güteparameters (g) eine Summierung von mindestens einem Teil der quellenabhängigen Partikelgrößenverteilung (cₙ') umfasst.

12. Verfahren nach einem der Ansprüche 10 oder 11, **dadurch gekennzeichnet, dass** die Bestimmung (F) des Güteparameters (g) eine Gewichtung umfasst, die insbesondere abhängig von der Partikelgröße (dₚ) der Aerosol-Partikel (12) und/oder abhängig von der Konzentration (k) mindestens einer Gaskomponente (13) des Aerosols (10) und/oder abhängig von der relativen Feuchtigkeit des Aerosols (10) ist.

13. Verfahren nach einem der Ansprüche 1 bis 12, **dadurch gekennzeichnet, dass** die Bestimmung (A) des Anteilparameters (f) und/oder der Partikelgrößenverteilung (cₙ) und/oder der quellenabhängigen Partikelgrößenverteilung (cₙ') und/oder des Güteparameters (g) jeweils die Bestimmung von Einzelwerten und eine statistische Auswertung der Einzelwerte umfasst.

14. Aerosol-Messgerät (15) zum Bestimmen einer quellenabhängigen Partikelgrößenverteilung (cₙ) eines Aerosols (10), wobei Aerosol-Partikel (12) des Aerosols (10) in einer Messzelle (25) derart angeordnet sind, dass die Aerosol-Partikel (12) von einem Lichtstrahl (18) beleuchtbar sind, wobei Streulicht (21) der Aerosol-Partikel (12) von einem Sensor (23) aufnehmbar und Streulichtsignale (21) der Aerosol-Partikel (12) intensitätsmäßig spektroskopisch erfassbar sind, **dadurch gekennzeichnet, dass** das Aerosol-Messgerät (15) eine elektronische Verarbeitungseinrichtung (24) aufweist, die dazu ausgebildet ist, die Schritte eines Verfahrens nach einem der Ansprüche 1 bis 13 durchzuführen.

15. Aerosol-Messgerät nach einem der Ansprüche 14, **gekennzeichnet durch** eine Gasmesseinheit (26), die dazu ausgebildet ist, die Konzentration (k) mindestens einer Gaskomponente (13) des Aerosols (10) zu bestimmen, wobei die Gasmesseinheit (26) insbesondere zur Detektion von mindestens einem der folgenden Stoffe und/oder Parameter ausgebildet ist: Kohlenstoffoxide, Stickstoffoxide, Schwefeloxide, Ozon, flüchtige organische Verbindungen, relative Luftfeuchtigkeit.

16. Aerosol-Messgerät nach einem der Ansprüche 14 bis 15, **dadurch gekennzeichnet, dass** der Lichtstrahl (18) polychromatisches Licht aufweist.

17. Aerosol-Messgerät nach einem der Ansprüche 14 bis 16, **dadurch gekennzeichnet, dass** die Bewegungsrichtung der Aerosol-Partikel (12) in der Messzelle (25), die Richtung des Lichtstrahles (18) in der Messzelle (25) und die Richtung des Streulichtes (21) jeweils paarweise senkrecht zueinander angeordnet sind.

18. Computerprogramm mit Programmcodemitteln, das dazu ausgestaltet ist, die Schritte eines Verfahrens nach einem der Ansprüche 1 bis 13 durchzuführen, wenn das Computerprogramm auf einem Computer oder einer entsprechenden Recheneinheit ausgeführt wird, insbesondere auf einer elektronischen Verarbeitungseinrichtung eines Aerosol-Messgerätes nach einem der Ansprüche 14 bis 17.

## Claims

1. A method for determining a source-dependent particle size distribution (cₙ') of an aerosol (10) by means of an aerosol measuring device (15), wherein aerosol particles (12) of the aerosol (10) flowing through a measuring cell (25) are illuminated in the measuring cell (25) with a light beam (18), scattered light (21) is picked up by a sensor (23) and scattered light signals (21) of the aerosol particles (12) are detected spectroscopically in terms of intensity, and a size distribution of the scattered light signals (21) representative of a particle size distribution (cₙ) is created, wherein a fraction parameter (f) is determined (A) that corresponds to a fraction of a source-dependent aerosol part (10a) of the aerosol (10), wherein a particle size distribution (cₙ) of the aerosol particles (12) is determined (D) and wherein the source-dependent particle size distribution (cₙ') of the aerosol (10) is determined (E) from the fraction parameter (f) and the particle size distribution (cₙ).

2. The method according to claim 1, **characterized in that** the fraction parameter (f) is determined from a comparison of two particle size distributions (cₙ) of the aerosol (10).

3. The method according to either claim 1 or claim 2, **characterized in that** the fraction parameter (f) is determined from a comparison of a parameter (k) of at least one gas component (13) of the aerosol (10) with a source-dependent reference value (k_{ref}).

4. The method according to claim 3, **characterized in that** the parameter (k) of the at least one gas component (13) corresponds to the concentration of the gas component (13) of the aerosol (10) and/or **in that** the source-dependent reference value (k_{ref}) corresponds to a source-dependent concentration of the gas component (13).

5. The method according to claim 4, **characterized in that**, to determine (A) the fraction parameter (f), the concentration (k_{CO2}) of carbon dioxide in the aerosol (10) is compared with a reference value k_{ref} of between 1% and 10%, in particular between 3% and 5%, in particular with a reference value k_{ref} of 4%.

6. The method according to any of claims 3 to 5, **characterized in that** the parameter (k) of the at least one gas component (13) and/or the reference value (k_{ref}) is corrected.

7. The method according to any of claims 1 to 6, **characterized in that** the method is terminated (C) if the fraction parameter (f) falls below a first user-defined value and/or if the fraction parameter (f) exceeds a second user-defined value.

8. The method according to any of claims 1 to 7, **characterized in that** the determined particle size distribution (cₙ) of the aerosol (10) is corrected.

9. The method according to any of claims 1 to 8, **characterized in that** the source-dependent particle size distribution (cₙ') is determined (E) by multiplying the particle size distribution (cₙ) of the aerosol (10) by the fraction parameter (f).

10. The method according to any of claims 1 to 9, **characterized in that** a quality parameter (g) of the aerosol (10) is determined (F) from at least part of the source-dependent particle size distribution (cₙ').

11. The method according to claim 10, **characterized in that** determining (F) the quality parameter (g) comprises summing at least part of the source-dependent particle size distribution (cₙ').

12. The method according to either claim 10 or claim 11, **characterized in that** determining (F) the quality parameter (g) comprises a weighting operation that depends in particular on the particle size (dₚ) of the aerosol particles (12) and/or depends on the concentration (k) of at least one gas component (13) of the aerosol (10) and/or depends on the relative humiditly of the aerosol (10).

13. The method according to any of claims 1 to 12, **characterized in that** determining (A) the fraction parameter (f) and/or the particle size distribution (cₙ) and/or the source-dependent particle size distribution (cₙ') and/or the quality parameter (g) comprises determining individual values and a statistical evaluation of the individual values.

14. An aerosol measuring device (15) for determining a source-dependent particle size distribution (cₙ) of an aerosol (10), wherein aerosol particles (12) of the aerosol (10) are arranged in a measuring cell (25) in such a way that the aerosol particles (12) can be illuminated by a light beam (18), wherein scattered light (21) of the aerosol particles (12) can be picked up by a sensor (23) and scattered light signals (21) of the aerosol particles (12) can be spectroscopically detected in terms of intensity, **characterized in that** the aerosol measuring device (15) has an electronic processing means (24) which is designed to carry out the steps of a method according to any of claims 1 to 13.

15. The aerosol measuring device according to claim 14 , **characterized by** a gas measuring unit (26) which is designed to determine the concentration (k) of at least one gas component (13) of the aerosol (10), the gas measuring unit (26) being designed in particular to detect at least one of the following substances and/or parameters: carbon oxides, nitrogen oxides, sulfur oxides, ozone, volatile organic compounds, and relative humidity.

16. The aerosol measuring device according to any of claims 14 to 15, **characterized in that** the light beam (18) has polychromatic light.

17. The aerosol measuring device according to any of claims 14 to 16, **characterized in that** the direction of movement of the aerosol particles (12) in the measuring cell (25), the direction of the light beam (18) in the measuring cell (25) and the direction of the scattered light (21) are arranged in pairs perpendicular to one another.

18. A computer program having program code means, which computer program is configured to carry out the steps of a method according to any of claims 1 to 13 when the computer program is executed on a computer or a corresponding computing unit, in particular on an electronic processing means of an aerosol measuring device according to any of claims 14 to 17.

## Revendications

1. Procédé pour la détermination d'une distribution de taille des particules (cₙ'), laquelle dépend de la source, d'un aérosol (10) au moyen d'un appareil de mesure d'aérosol (15), dans lequel des particules d'aérosol (12) de l'aérosol (10) s'écoulant à travers une cellule de mesure (25) sont éclairées dans la cellule de mesure (25) par un faisceau lumineux (18), de la lumière diffusée (21) est enregistrée par un capteur (23) et des signaux de lumière diffusée (21) des particules d'aérosol (12) sont détectés par spectroscopie en fonction de leur intensité, et une distribution de taille, laquelle représente une distribution de taille des particules (cₙ), des signaux de lumière diffusée (21) est établie, dans lequel un paramètre de proportion (f) est déterminé (A), lequel correspond à une proportion d'une partie d'aérosol (10a) dépendant de la source dans l'aérosol (10), dans lequel une distribution de taille des particules (cₙ) des particules d'aérosol (12) est déterminée (D) et dans lequel la distribution de taille des particules (cₙ') de l'aérosol (10) dépendant de la source est déterminée (E) à partir du paramètre de proportion (f) et de la distribution de taille des particules (cₙ).

2. Procédé selon la revendication 1, **caractérisé en ce que** le paramètre de proportion (f) est déterminé à partir d'une comparaison de deux distributions de taille des particules (cₙ) de l'aérosol (10).

3. Procédé selon l'une des revendications 1 ou 2, **caractérisé en ce que** le paramètre de proportion (f) est déterminé à partir d'une comparaison d'un paramètre (k) d'au moins un composant gazeux (13) de l'aérosol (10) avec une valeur de référence (k_{ref}) dépendant de la source.

4. Procédé selon la revendication 3, **caractérisé en ce que** le paramètre (k) de l'au moins un composant gazeux (13) correspond à la concentration du composant gazeux (13) dans l'aérosol (10) **et/ou en ce que** la valeur de référence (k_{ref}) dépendant de la source correspond à une concentration, laquelle dépend de la source, du composant gazeux (13).

5. Procédé selon la revendication 4, **caractérisé en ce que**, pour la détermination (A) du paramètre de proportion (f), la concentration (k_{CO2}) de dioxyde de carbone dans l'aérosol (10) est comparée avec une valeur de référence(k_{ref}) comprise entre 1 % à 10 %, en particulier entre 3 % et 5 %, en particulier avec une valeur de référence (k_{ref}) de 4 %.

6. Procédé selon l'une des revendications 3 à 5, **caractérisé en ce que** le paramètre (k) de l'au moins un composant gazeux (13) et/ou la valeur de référence (k_{ref}) sont corrigés.

7. Procédé selon l'une des revendications 1 à 6, **caractérisé en ce que** le procédé est interrompu (C) lorsque le paramètre de proportion (f) est inférieur à une première valeur définie par l'utilisateur et/ou lorsque le paramètre de proportion (f) est supérieur à une seconde valeur définie par l'utilisateur.

8. Procédé selon l'une des revendications 1 à 7, **caractérisé en ce que** la distribution de taille des particules (cₙ) déterminée de l'aérosol (10) est corrigée.

9. Procédé selon l'une des revendications 1 à 8, **caractérisé en ce que** la distribution de taille des particules (cₙ') dépendant de la source est déterminée (E) par une multiplication de la distribution de taille des particules (cₙ) de l'aérosol (10) par le paramètre de proportion (f).

10. Procédé selon l'une des revendications 1 à 9, **caractérisé en ce qu'**un paramètre de qualité (g) de l'aérosol (10) est déterminé (F) à partir d'au moins une partie de la distribution de taille des particules (cₙ') dépendant de la source.

11. Procédé selon la revendication 10, **caractérisé en ce que** la détermination (F) du paramètre de qualité (g) comprend une accumulation d'au moins une partie de la distribution de taille des particules (cₙ') dépendant de la source.

12. Procédé selon l'une des revendications 10 ou 11, **caractérisé en ce que** la détermination (F) du paramètre de qualité (g) comprend une pondération qui dépend en particulier de la taille des particules (dₚ) des particules d'aérosol (12) et/ou de la concentration (k) d'au moins un composant gazeux (13) de l'aérosol (10) et/ou de l'humidité relative de l'aérosol (10).

13. Procédé selon l'une des revendications 1 à 12, **caractérisé en ce que** la détermination (A) du paramètre de proportion (f) et/ou de la distribution de taille des particules (cₙ) et/ou de la distribution de taille des particules (cₙ') dépendant de la source et/ou du paramètre de qualité (g) comprend respectivement la détermination de valeurs individuelles et une évaluation statistique des valeurs individuelles.

14. Appareil de mesure d'aérosol (15) pour la détermination d'une distribution de taille des particules (cₙ), laquelle dépend de la source, d'un aérosol (10), dans lequel des particules d'aérosol (12) de l'aérosol (10) sont disposées dans une cellule de mesure (25) de telle sorte que les particules d'aérosol (12) peuvent être éclairées par un faisceau lumineux (18), dans lequel de la lumière diffusée (21) des particules d'aérosol (12) peut être enregistrée par un capteur (23) et des signaux de lumière diffusée (21) des particules d'aérosol (12) peuvent être détectés par spectroscopie en fonction de leur intensité, **caractérisé en ce que** l'appareil de mesure d'aérosol (15) présente un dispositif de traitement électronique (24) qui est configuré pour mettre en oeuvre les étapes d'un procédé selon l'une des revendications 1 à 13.

15. Appareil de mesure d'aérosol selon l'une des revendications 14, **caractérisé par** une unité de mesure de gaz (26) qui est configurée pour déterminer la concentration (k) d'au moins un composant gazeux (13) de l'aérosol (10), dans lequel l'unité de mesure de gaz (26) est en particulier configurée pour la détection d'au moins l'une des substances et/ou l'un des paramètres suivants : oxydes de carbone, oxydes d'azote, oxydes de soufre, ozone, composés organiques volatils, humidité relative.

16. Appareil de mesure d'aérosol selon l'une des revendications 14 à 15, **caractérisé en ce que** le faisceau lumineux (18) présente une lumière polychromatique.

17. Appareil de mesure d'aérosol selon l'une des revendications 14 à 16, **caractérisé en ce que** la direction de déplacement des particules d'aérosol (12) dans la cellule de mesure (25), la direction du faisceau lumineux (18) dans la cellule de mesure (25) et la direction de la lumière diffusée (21) sont respectivement disposées de manière à être perpendiculaires les unes aux autres par paires.

18. Programme informatique comportant des moyens de code de programme, configuré pour mettre en œuvre les étapes d'un procédé selon l'une des revendications 1 à 13, lorsque le programme informatique est exécuté sur un ordinateur ou une unité de calcul correspondante, en particulier sur un dispositif de traitement électronique d'un appareil de mesure d'aérosol selon l'une des revendications 14 à 17.
